# NEUE EUROPÄISCHE PATENTSCHRIFT

(11) **EP 1 566 264 B2**
(45) Veröffentlichungstag und Bekanntmachung des Hinweises auf die Entscheidung über den Einspruch: **23.11.2011**
(45) Hinweis auf die Patenterteilung: 30.05.2007
(21) Anmeldenummer: 04003612.1
(22) Anmeldetag: 18.02.2004
(51) Int. Cl.: B32B 27/08, B32B 15/08, E04B 1/76, E04B 1/80

(54) **Wärmedämmkörper**
Heat insulating panel
Corps thermo-isolant

(43) Veröffentlichungstag der Anmeldung: 24.08.2005
(73) Patentinhaber: SCHWENK Dämmtechnik GmbH & Co KG, 86899 Landsberg (DE)
(72) Erfinder: Schiffke, Peter, Dipl.-Ing., 86925 Fuchstal-Leeder (DE)
(74) Vertreter: HOFFMANN EITLE

(56) Entgegenhaltungen:
- EP-A- 0 099 574
- EP-A- 0 164 006
- WO-A-97/36129
- WO-A-03/002828
- WO-A2-2004/001149
- DE-A- 4 344 713
- DE-A- 19 809 316
- DE-A1- 10 234 409
- DE-C1- 4 331 590
- DE-U- 29 605 338
- JP-A- 8 303 686
- US-A- 4 529 638
- US-A- 5 681 639

## Beschreibung

### Technisches Gebiet

Die vorliegende Erfindung betrifft einen Wärmedämmkörper, insbesondere Wärmedämmplatte zur Isolierung von Bauwerken, mit mindestens einem Formling, der ein mikroporöses Wärmedämmmaterial aufweist, das in eine luftdichte Umhüllung aufgenommen ist.

### Stand der Technik

Wärmedämmkörper der eingangs genannten Art finden beispielsweise in der Automobilindustrie, im Anlagenbau oder bei Kühlschränken zunehmend Anwendung. So offenbaren beispielsweise die EP 0 315 169 B1 und die DE 44 32 896 C2 Wärmedämmkörper auf der Basis von verpresster, mikroporöser Kieselsäure, die mit einer Aluminiumfolie umhüllt ist, wobei innerhalb der Umhüllung ein Unterdruck aufgebaut wird.

Derartige Wärmedämmkörper besitzen ausgezeichnete wärmedämmende Eigenschaften, vor allem da durch den vakuumähnlichen Zustand innerhalb der Umhüllung Wärmeleitung infolge Konvektion weitgehend unterbunden ist. Hierdurch lassen sie die Abmessungen und das Gewicht der Wärmedämmung erheblich reduzieren.

Allerdings hat sich gezeigt, dass diese Technologie für Anwendungen mit hohen mechanischen Beanspruchungen nur bedingt geeignet ist, da durch Stöße, Schläge etc. leicht eine Beschädigung der luftdichten Umhüllung hervorgerufen werden kann, was zu einem drastischen Absinken der Wärmedämmung führt.

Ferner offenbart die EP 0 099 574 A2 einen Wärmedämmkörper nach dem Oberbegriff von Anspruch 1, der allerdings nicht für Bauwerke vorgesehen ist.

### Darstellung der Erfindung

Es ist daher Aufgabe der Erfindung, einen Wärmedämmkörper bereitzustellen, der ausgezeichnete Wärmedämmeigenschaften mit einer verbesserten mechanischen Widerstandsfähigkeit verbindet.

Diese Aufgabe wird erfindungsgemäß durch einen Wärmedämmkörper mit den Merkmalen von Anspruch 1 gelöst. Vorteilhafte Weiterbildungen der Erfindung sind in den abhängigen Ansprüchen angegeben.

Der Erfindung liegt der Gedanke zugrunde, mindestens einen vakuumisolierten Formling mit einem weiteren wärmedämmenden Material zu kombinieren, das den Formling beispielsweise durch seine Festigkeit, seine Dämpfungseigenschaften, seine Geometrie etc. eine erhöhte mechanische Widerstandsfähigkeit verleiht. Zu diesem Zweck weist der Wärmedämmkörper eine wärmedämmende Deckschicht auf, die den mindestens einen Formling vollständig umgibt. Hierdurch wird es erstmals möglich, vakuumisolierte Wärmedämmkörper auch im Bereich hoher mechanische Beanspruchungen wie beispielsweise bei Fassaden, Dachdeckungen und ähnlichen Anwendungen im Baubereich einzusetzen.

Insbesondere sorgt die wärmedämmende Deckschicht dafür, dass die Umhüllung der jeweiligen Formlinge nicht bereits bei leichten Schlägen oder Stößen zerstört wird. Gleichzeitig trägt die Deckschicht aufgrund ihrer wärmedämmenden Eigenschaften aber auch zu der gewünschten Wärmedämmung bei, während der Wärmedämmkörper als Ganzes sine kompakten Abmessungen beibehält. Nicht zuletzt verleiht die wärmedämmende Deckschicht dem erfindungsgemäßen Wärmedämmkörper als Ganzes auch strukturelle Stabilität, so dass es beispielsweise möglich wird, den Wärmedämmkörper mit wenigen Befestigungspunkten an einem Tragwerk dauerhaft anzubringen.

Hinsichtlich Anwendungen im Baubereich stellt der erfindungsgemäße Wärmedämmkörper auch eine geeignete Grundlage für weitere Gebäudeschichten dar. So kann auf die wärmedämmende Deckschicht, die beispielsweise aus Hartschaum bestehen kann, problemlos Putz, Estrich, oder dergleichen aufgetragen werden, was auf den glatten Aluminiumhüllen von vakuumisolierten Formlingen nicht sinnvoll ist.

Gemäß der vorliegenden Erfindung weist der mindestens eine Formling mindestens eine Durchgangsöffnung und optional eine Randkerbe auf. Die Durchgangsöffnung und ggf. optionale Randkerbe kann im Rahmen der vorliegenden Erfindung vorteilhaft zwei Aufgaben erfüllen. Einerseits ermöglicht die mindestens eine Durchgangsöffnung und ggl. optionale Randkerbe einen verbesserten Verbund zwischen dem jeweiligen Formling und der wärmedämmenden Deckschicht, was die strukturelle Stabilität des erfindungsgemäßen Wärmedämmkörpers deutlich erhöht. Dabei erstreckt sich das Material der wärmedämmenden Deckschicht in die mindestens eine Durchgangsöffnung.

Andererseits kann die mindestens eine Durchgangsöffnung und ggl. optionale Randkerbe auch als Befestigungspunkt für Bolzen, Dübel oder dergleichen verwendet werden, um den Wärmedämmkörper an dem Bauwerk zu befestigen, ohne den mindestens einen Formling des erfindungsgemäßen Wärmedämmkörpers zu beschädigen. Dabei ist jedoch zu beachten, dass der erfindungsgemäße Wärmedämmkörper auch auf andere Art an dem Bauwerk angebracht werden kann, beispielsweise durch Auftragen von Mörtel oder dergleichen.

Gemäß einer Weiterbildung der Erfindung weist die wärmedämmende Deckschicht Hartschaum, bevorzugt expandiertes Polystyrol auf. Auf diese Weise verbindet die wärmedämmende Deckschicht gute wärmedämmende Eigenschaften mit einer ausreichenden mechanischen Festigkeit und Stabilität. Darüber hinaus ergibt sich bei Verwendung von Hartschaum, insbesondere expandiertem Polystyrol, ein einfacher und kostengünstiger Herstellungsprozess, wobei es in diesem Zusammenhang besonders bevorzugt ist, dass der mindestens eine Formling in die Deckschicht eingeschäumt ist.

Bei dem mikroporösen Wärmedämmmaterial des mindestens einen Formlings kann es sich grundsätzlich um einen beliebigen geeigneten Stoff handeln. Um zu angemessenen Kosten eine ausgezeichnete Wärmedämmung zu erzielen ist es jedoch erfindungsgemäß bevorzugt, dass das mikroporöse Wärmedämmmaterial Kieselsäure aufweist. Dabei lässt sich die Wärmedämmung des mindestens einen Formlings gemäß einer Weiterbildung der vorliegenden Erfindung auf einfache Weise noch weiter steigern, wenn innerhalb der Umhüllung des mindestens einen Formlings ein Unterdruck herrscht. Obgleich die Erfindung nicht auf einen bestimmten Unterdruck begrenzt ist, hat sich gezeigt, dass Absolutdrücke von höchstens 100 mbar, besonders bevorzugt höchstens 50 mbar ausreichende Wärmedämmeigenschaften bieten und noch wirtschaftlich ausführbar sind.

Der mindestens eine Formling des erfindungsgemäßen Wärmedämmkörpers ist hinsichtlich seiner Abmessungen, insbesondere seiner Dicke, nicht besonders beschränkt. Er sollte jedoch unter Berücksichtigung der verwendeten Materialien derart ausgelegt sein, dass er eine Wärmeleitfähigkeit von höchstens 0,005 W/(mK) besitzt. Alternativ oder zusätzlich ist gemäß einer Weiterbildung der vorliegenden Erfindung vorgesehen, dass die wärmedämmende Deckschicht eine Wärmeleitfähigkeit von höchstens 0,050 W/(mK) aufweist. Durch diese Werte der jeweiligen Wärmeleitfähigkeit lassen sich Wärmedämmkörper insbesondere zur Isolierung von Bauwerken schaffen, die eine deutlich verbesserte Wärmeisolierung bzw. erheblich kompaktere Abmessungen/Dicken ermöglichen.

In einer einfachen Ausführungsform kann der erfindungsgemäße Wärmedämmkörper prinzipiell lediglich einen einzigen Formling aufweisen. Hinsichtlich einer optimierten Wärmedämmung oder auch einer Anpassung an geometrische Anforderungen ist gemäß einer Weiterbildung der vorliegenden Erfindung jedoch vorgesehen, dass er mindestens zwei sandwichartig angeordnete Formlinge aufweist. Dabei ist es besonders bevorzugt, dass sich die wärmedämmende Deckschicht zwischen jeweils benachbarte Formlinge erstreckt.

Gemäß einer Weiterbildung dieses Konzepts mit mindestens zwei sandwichartig angeordneten Formlingen ist vorgesehen, dass zumindest einige Durchgangsöffnungen benachbarter Formlinge versetzt angeordnet sind. Hierdurch wird einerseits eine verbesserte Wärmedämmung erzielt, während andererseits auch ein erhöhter Verbund zwischen benachbarten Formlingen bzw. den Formlingen und der wärmedämmenden Deckschicht erreicht wird.

Um die Ausbildung von Wärmebrücken zwischen benachbarten Wärmedämmkörpern am Bauwerk zu vermeiden, ist gemäß einer Weiterbildung der vorliegenden Erfindung vorgesehen, dass der Wärmedämmkörper auf gegenüberliegenden Rändern zueinander komplementäre Profilierungen besitzt, die bevorzugt nach Art eines Stufenfalzes oder einer Nut-Feder-Anordnung ausgebildet sind. Hierdurch lässt sich gleichzeitig eine lagegenaue Positionierung und eine erhöhte Zuverlässigkeit beim Anbringen der Wärmedämmkörper an einem Bauwerk erzielen.

Im Hinblick auf die Nutzung von Durchgangsöffnungen als Befestigungspunkte ist bei Ausführungsformen mit mindestens zwei sandwichartig angeordneten Formlingen ferner bevorzugt, dass zumindest einige Durchgangsöffnungen benachbarter Formlinge im Wesentlichen zueinander fluchtend angeordnet sind. In diesem Falle können Befestigungselemente durch den Wärmedämmkörper hindurchgeführt werden, ohne die Formlinge zu beschädigen. Dabei ist es im Hinblick auf ein einfaches und beschädigungsfreies Setzen der Befestigungselemente bevorzugt, dass die Lage der fluchtenden Durchgangsöffnungen an der Oberfläche des Wärmedämmkörpers erkennbar ist, beispielsweise anhand von Markierungen, Erhöhungen oder dergleichen.

Die Umhüllung des mindestens einen Formlings kann im Rahmen der vorliegenden Erfindung aus einem geeigneten, luftdichten Material bestehen. Im Hinblick auf eine einfache Herstellung und eine hohe Dauerhaftigkeit des erfindungsgemäßen Wärmedämmkörpers ist es jedoch bevorzugt, dass die Umhüllung des mindestens einen Formlings aus Aluminium oder Kunststoff besteht.

### Kurze Beschreibung der Zeichnungen

- Fig. 1: zeigt eine schematische Draufsicht eines Wärmedämmkörpers 1 als bevorzugte Ausführungsform der vorliegenden Erfindung;
- Fig. 2: zeigt jeweils in einer schematischen Schnittansicht zwei bevorzugte Schichtaufbauten des Wärmedämmkörpers aus Fig. 1, wobei der Schnitt jeweils entlang der Linie A-A in Fig. 1 geführt ist;
- Fig. 3: zeigt eine schematische Perspektivansicht des Wärmedämmkörpers gemäß Fig. 2a);
- Fig. 4: zeigt eine schematische Schnittansicht einer weiteren Ausführungsform des erfindungsgemäßen Wärmedämmkörpers.

### Ausführliche Beschreibung bevorzugter Ausführungsformen

Bevorzugte Ausführungsformen der vorliegenden Erfindung werden nachfolgend unter Bezugnahme auf die begleitenden Zeichnungen beschrieben.

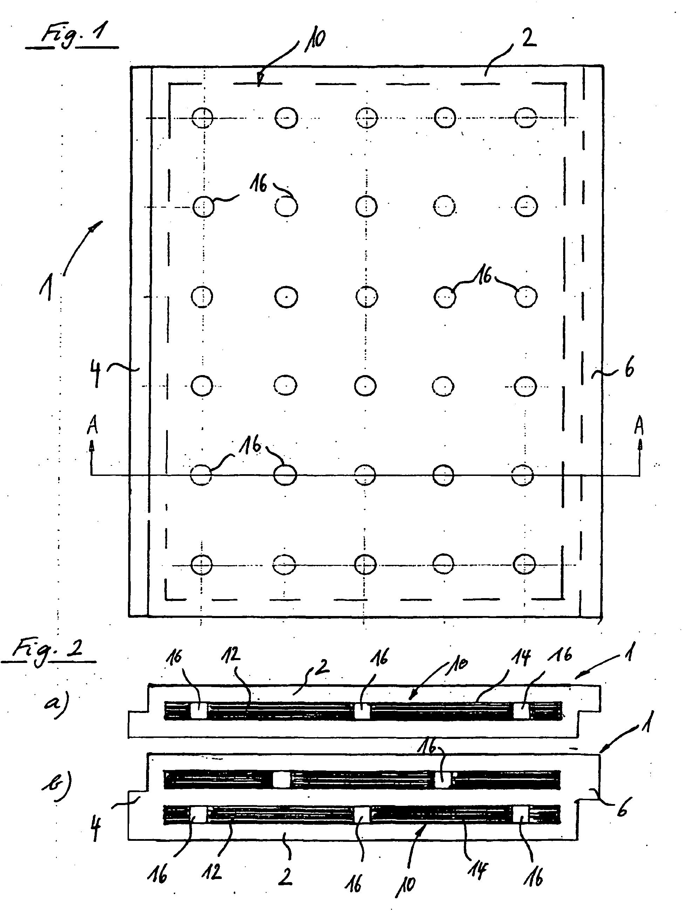

Fig. 1 zeigt eine schematische Draufsicht eines Wärmedämmkörpers 1 als bevorzugte Ausführungsform der vorliegenden Erfindung, während Fig. 2 zwei bevorzugte Schichtaufbauten des in Fig. 1 gezeigten Wärmedämmkörpers jeweils in einer schematischen Schnittansicht veranschaulicht. Der Wärmedämmkörper 1 wird zunächst unter Bezugnahme auf Fig. 2a) beschrieben und umfasst in der vorliegenden Ausführungsform einen Formling 10, der in eine wärmedämmende Deckschicht 2 eingebettet ist, die den Formling 10 vollständig umgibt. Bei der wärmedämmenden Deckschicht 2 handelt es sich um einen Hartschaum, der in der vorliegenden Ausführungsform aus expandiertem Polystyrol besteht. Der Formling 10 kann in beliebiger Weise in die wärmedämmende Deckschicht 2 eingebettet sein, wobei hinsichtlich einer einfachen Herstellung und einer guten Abdichtung ein Einschäumen des Formlings 10 in die Deckschicht 2 bevorzugt ist.

Obgleich die wärmedämmende Deckschicht 2 nicht den Hauptanteil der Wärmedämmung übernehmen muss, sollte sie doch gewisse wärmedämmende Eigenschaften besitzen, um unnötige Wärmebrücken zu vermeiden. Der in der vorliegenden Ausführungsform verwendete Hartschaum besitzt beispielsweise eine Wärmeleitfähigkeit von 0,030 W/(mK).

Der Formling 10 weist ein mikroporöses Wärmedämmmaterial 12 auf, das in eine luftdichte Umhüllung 14 aufgenommen ist. Bei dem mikroporösen Mikrodämmmaterial handelt es sich bei der vorliegenden Ausführungsform um Kieselsäure (SiO₂), wobei jedoch auch andere geeignete, mikroporöse Stoffe zum Einsatz kommen können. Dabei ist es erfindungsgemäß bevorzugt, dass das Material derart ausgelegt ist, dass der Formling 10 eine Wärmeleitfähigkeit von höchstens 0,005 W/(mK) besitzt. Darüber hinaus herrscht innerhalb der Umhüllung 14 des Formlings 10 ein Unterdruck. Dieser sollte erfindungsgemäß derart festgelegt werden, dass sich ein guter Kompromiss aus einer wirtschaftlichen Herstellung und ausgezeichneten Wärmedämmeigenschaften des Formlings 10 ergibt. Zu diesem Zweck kann der Unterdruck innerhalb der Umhüllung 14 beispielsweise zwischen 50 und 100 mbar liegen.

Die luftdichte Umhüllung 14 besteht in der vorliegenden Ausführungsform aus Aluminium, kann jedoch aus einem beliebigen Material besteht, beispielsweise einem Metall-Kunststoffverbund.

Wie in Fig. 2a) am besten zu erkennen ist, besitzt der Formling 10 in der vorliegenden Ausführungsform drei nebeneinander liegende Durchgangsöffnungen 16, wobei in dem Formling entsprechend Fig. 1 mehrere Reihen von Durchgangsöffnungen 16 vorgesehen sein können. Diese Durchgangsöffnungen sind in der vorliegenden Ausführungsform ebenfalls mit dem Material der wärmedämmenden Deckschicht 2 gefüllt, sodass sich ein ausgezeichneter Verbund zwischen der wärmedämmenden Deckschicht 2 und dem Formling 10 ergibt. Darüber hinaus können die Durchgangsöffnungen 16 zum Hindurchführen von Bolzen, Dübeln oder dergleichen verwendet werden, um den erfindungsgemäßen Wärmedämmkörper 10 beispielsweise an einer zu isolierenden Wand zu befestigen. Zu diesem Zweck ist die Oberfläche des erfindungsgemäßen Wärmedämmkörpers, obgleich in den Figuren nicht gezeigt, mit einer Markierung versehen, welche die Position der einzelnen Durchgangsöffnungen 16 erkennen lässt.

Fig. 2b) zeigt eine schematische Schnittansicht eines alternativen Schichtaufbaus des in Fig. 1 gezeigten Wärmedämmkörpers 1. In dieser Ausführungsform umfasst der Wärmedämmkörper 1 zwei sandwichartig angeordnete Formlinge 10, die derart beabstandet sind, dass sich die wärmedämmende Deckschicht 2 zwischen die beiden Formlinge 10 erstreckt. Mit diesem Aufbau lässt sich auf einfache Weise unter Nutzung derselben Formlinge 10 wie in Fig. 2a) eine erhöhte Wärmedämmung und Stabilität erzielen. Dabei sind zur Optimierung der Wärmedämmung und Stabilität die Durchgangsöffnungen 16 der in Fig. 2b) gezeigten Ausführungsform versetzt zueinander angeordnet. Wenn eine Befestigung des Wärmedämmkörpers 1 mit Dübeln oder dergleichen geplant ist, ist es selbstverständlich möglich, dass einige der Durchgangsöffnungen der beiden Formlinge 10 auch fluchtend zueinander angeordnet sind, obgleich in Fig. 2b) nicht gezeigt.

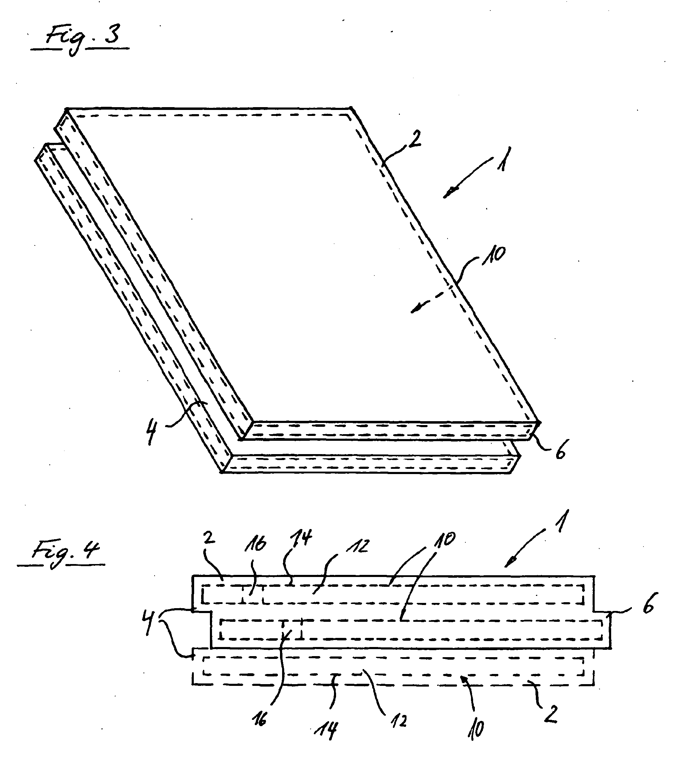

In praktischen Anwendungen werden erfindungsgemäß mehrere Wärmedämmkörper 1 flächig nebeneinanderliegend an einem Bauwerksabschnitt befestigt, beispielsweise an einer Wand, einem Dach oder auch einer Bodenfläche. Um hierbei ein einfaches Positionieren zu erzielen und die Ausbildung von Wärmebrücken im Stoßfugenbereich zu verhindern, sind die in Fig. 2 gezeigten Wärmedämmkörper 1 auf den gegenüberliegenden Rändern mit zueinander komplementären Profilierungen 4, 6 ausgestattet, die in der in Fig. 2 gezeigten Ausführungsform nach Art eines Stufenfalzes ausgeformt sind. Wie in Fig. 3 in einer schematischen Perspektivansicht zu erkennen ist, ist es besonders bevorzugt, dass die Profilierungen 4, 6 an allen gegenüberliegenden Rändern vorgesehen sind. Dies besitzt insbesondere den Vorteil, dass die in Fig. 3 gezeigte Ausführungsform des erfindungsgemäßen Wärmedämmkörpers 1 einfach hergestellt werden kann, indem lediglich ein Versatz zwischen einem ersten und einem zweiten Abschnitt des Wärmedämmkörpers realisiert wird.

Fig. 4 zeigt eine schematische Schnittansicht einer weiteren bevorzugten Ausführungsform des erfindungsgemäßen Wärmedämmkörpers 1. Dabei zeigt der obere Teil von Fig. 4, der mit einer durchgezogenen Linie umrandet ist, prinzipiell den Aufbau aus Fig. 2b). Dieser kann im Rahmen der Erfindung durch eine beliebige Anzahl zusätzlicher Formlinge 10, die ebenfalls mit einer wärmedämmenden Deckschicht 2 umhüllt sind, ergänzt werden. In der in Fig. 4 gezeigten Ausführungsform sind drei Formlinge zu einer erfindungsgemäßen Wärmdämmplatte 1 vereint, wobei sich durch die Anordnung der Formlinge 10 und der wärmedämmenden Deckschicht 2 Profilierungen 4, 6 nach Art einer Nut-Feder-Anordnung ergeben.

## Patentansprüche

1. Wärmedämmkörper (1) zur Isolierung von Bauwerken, insbesondere Wärmedämmplatte, mit mindestens einem Formling (10), der ein mikroporöses Wärmedämmmaterial (12) aufweist, das in eine luftdichte Umhüllung (14) aufgenommen ist,
wobei der Wärmedämmkörper (1) ferner eine wärmedämmende Deckschicht (2) aufweist, die den mindestens einen Formling (10) vollständig umgibt,
**dadurch gekennzeichnet, dass** der mindestens eine Formling (10) mindestens eine Durchgangsöffnung (16) aufweist, und die mindestens eine Durchgangsöffnung (16)
die mindestens eine Durchgangsöffnung (16) des Formlings durch das Material der wärmedämmenden Deckschicht (2) ausgefüllt ist.

2. Wärmedämmkörper nach Anspruch 1, **dadurch gekennzeichnet, dass** die wärmedämmende Deckschicht (2) Hartschaum, bevorzugt expandiertes Polystyrol aufweist, wobei der mindestens eine Formling (10) besonders bevorzugt in die Deckschicht (2) eingeschäumt ist.

3. Wärmedämmkörper nach Anspruch 1 oder 2, **dadurch gekennzeichnet, dass** das mikroporöse Wärmedämmmaterial (12) Kieselsäure (SiO₂) oder ähnliche geeignete Stoffe aufweist.

4. Wärmedämmkörper nach einem der vorhergehenden Ansprüche, **dadurch gekennzeichnet, dass** innerhalb der Umhüllung (14) des mindestens einen Formlings (10) ein Unterdruck herrscht.

5. Wärmedämmkörper nach einem der vorhergehenden Ansprüche, **dadurch gekennzeichnet, dass** der mindestens eine Formling (10) eine Wärmeleitfähigkeit von höchstens 0,005 W/(mK) und/oder die wärmedämmende Deckschicht (2) eine Wärmeleitfähigkeit von höchstens 0,050 W/(mK) aufweist.

6. Wärmedämmkörper nach einem der vorhergehenden Ansprüche, **dadurch gekennzeichnet, dass** er mindestens zwei sandwichartig angeordnete Formlinge (10) aufweist, wobei sich die wärmedämmende Deckschicht (2) bevorzugt zwischen jeweils benachbarte Formlinge erstreckt.

7. Wärmedämmkörper nach einem der vorhergehenden Ansprüche, **dadurch gekennzeichnet, dass** er mindestens zwei sandwichartig angeordnete Formlinge (10) aufweist, wobei zumindest einige Durchgangsöffnungen (16) benachbarter Formlinge versetzt angeordnet sind.

8. Wärmedämmkörper nach einem der vorhergehenden Ansprüche, **dadurch gekennzeichnet, dass** er mindestens zwei sandwichartig angeordnete Formlinge aufweist, wobei zumindest einige Durchgangsöffnungen benachbarter Formlinge im wesentlichen zueinander fluchtend angeordnet sind.

9. Wärmedämmkörper nach Anspruch 8, **dadurch gekennzeichnet, dass** die Lage der fluchtenden Durchgangsöffnungen an der Oberfläche des Wärmedämmkörpers erkennbar ist.

10. Wärmedämmkörper nach einem der vorhergehenden Ansprüche, **dadurch gekennzeichnet, dass** die Umhüllung (14) des mindestens einen Formlings (10) aus Aluminium oder Kunststoff besteht.

11. Wärmedämmkörper nach einem der vorhergehenden Ansprüche, **dadurch gekennzeichnet, dass** er auf gegenüberliegenden Rändern zueinander komplementäre Profilierungen (4, 6) besitzt, bevorzugt nach Art eines Stufenfalzes oder einer Nut-Feder-Anordnung.

## Claims

1. Thermal insulation member (1) for insulating building structures, in particular a thermal insulation panel, having at least one moulding (10) comprising a microporous thermal insulation material (12) accommodated in an airtight envelope (14),
Wherein the thermal insulation member (1) further comprises a thermally insulating covering layer (2) completely surrounding the at least single moulding (10),
**Characterised in that** the at least single moulding (10) has at least one through-opening (16), and
The at least single through-opening (16) of the moulding is filled in with the material of the thermally insulating covering layer (2).

2. Thermal insulation member according to claim 1, **characterised in that** the thermally insulating covering layer (2) comprises rigid foam, preferably expanded polystyrene, wherein the at least single moulding (10) is particularly preferably foam-embedded into the covering layer (2).

3. Thermal insulation member according to claim 1 or 2, **characterised in that** the microporous thermal insulation material (12) comprises silicic acid (SiO₂) or similar substances.

4. Thermal insulation member according to any of the preceding claims, **characterised in that** within the envelope (14) of the at least single moulding (10) a partial vacuum prevails.

5. Thermal insulation member according to any of the preceding claims, **characterised in that** the at least single moulding (10) has a thermal conductivity of at most 0.005 W/(mk) and/or the thermally insulating covering layer (2) has a thermal conductivity of at most 0.050 W/(mk).

6. Thermal insulation member according to any of the preceding claims, **characterised in that** it comprises at least two mouldings (10) arranged in sandwich-like manner, wherein the thermally insulating covering layer (2) preferably extends between mouldings adjoining one another.

7. Thermal insulation member according to any of the preceding claims, **characterised in that** it comprises at least two mouldings (10), arranged in sandwich-like manner, wherein at least some through-openings (16) of adjoining mouldings are arranged in offset manner.

8. Thermal insulation member according to any of the preceding claims, **characterised in that** it comprises at least two mouldings arranged in sandwich-like manner, wherein at least some through-openings of adjoining mouldings are arranged substantially in alignment with one another.

9. Thermal insulation member according to claim 8, **characterised in that** the position of the aligned through-openings is discernable on the surface of the thermal insulation member.

10. Thermal insulation member according to any of the preceding claims, **characterised in that** the envelope (14) of the at least single moulding (10) consists of aluminium or plastic.

11. Thermal insulation member according to any of the preceding claims, **characterised in that** it possesses shaped profiles (4, 6) complementary to one another at opposite edges, preferably in the manner of a stepped rebate or tongue-and-groove arrangement.

## Revendications

1. Corps thermo-isolant (1) pour l'isolation d'ouvrages de construction, en particulier panneau d'isolation thermique, comprenant au moins une ébauche de forme (10) présentant un matériau d'isolation thermique (12) microporeux, logé dans un enveloppement (14) étanche à l'air,
le corps d'isolation thermique (1) présentant en outre une couche de couverture (2) isolant thermiquement, entourant complètement la au moins une ébauche de forme (10),
**caractérisé en ce que** la au moins une ébauche de forme (10) présente au moins une ouverture de passage (16), et
la au moins une ouverture de passage (16) de l'ébauche de forme est remplie par le matériau de la couche de couverture (2) isolant thermiquement.

2. Corps thermo-isolant selon la revendication 1, **caractérisé en ce que** la couche de couverture (2) isolant thermiquement présente une mousse dure, de préférence en polystyrène expansé, la au moins une ébauche de forme (10) étant de façon particulièrement préférée créée par moussage dans la couche de couverture (2).

3. Corps thermo-isolant selon la revendication 1 ou 2, **caractérisé en ce que** le matériau d'isolation thermique (12) microporeux présente de l'acide silicique (SiO₂) ou d'autres matériaux appropriés analogues.

4. Corps thermo-isolant selon l'une des revendications précédentes, **caractérisé en ce qu'**une pression négative règne à l'intérieur de l'enveloppement (14) de la au moins une ébauche de forme (10).

5. Corps thermo-isolant selon l'une des revendications précédentes, **caractérisé en ce que** la au moins une ébauche de forme (10) présente une conductivité thermique maximale de 0,005 W/(mK) et/ou la couche de couverture (2) isolant thermiquement présente une conductivité thermique maximale de 0,050 W/(mK).

6. Corps thermo-isolant selon l'une des revendications précédentes, **caractérisé en ce qu'**il présente au moins deux ébauches de forme (10) disposées à la façon d'un sandwich, la couche de couverture (2) isolant thermiquement s'étendant de préférence entre chaque fois des ébauches de forme voisines.

7. Corps thermo-isolant selon l'une des revendications précédentes, **caractérisé en ce qu'**il présente au moins deux ébauches de forme (10) disposées à la façon d'un sandwich, au moins quelques ouvertures de passage (16) d'ébauches de forme voisines étant disposées de façon décalée.

8. Corps thermo-isolant selon l'une des revendications précédentes, **caractérisé en ce qu'**il présente au moins deux ébauches de forme disposées à la façon d'un sandwich, au moins quelques ouvertures de passage d'ébauches de forme voisines étant disposées sensiblement en alignement mutuel.

9. Corps thermo-isolant selon la revendication 8, **caractérisé en ce que** la position des ouvertures de passage, en alignement, sur la surface du corps thermo-isolant est identifiable.

10. Corps thermo-isolant selon l'une des revendications précédentes, **caractérisé en ce que** l'enveloppement (14) de la au moins une ébauche de forme (10) est composé d'aluminium ou de matière synthétique.

11. Corps thermo-isolant selon l'une des revendications précédentes, **caractérisé en ce qu'**il présente, sur des bords opposés, des profilages (4, 6) mutuellement complémentaires, de préférence à la façon d'un pli étagé ou d'un agencement à rainure et languette.
